# FASCICULE DE BREVET EUROPEEN

(11) **EP 4 585 842 B1**
(45) Date de publication et mention de la délivrance du brevet: **04.11.2026**
(21) Numéro de dépôt: 25150740.6
(22) Date de dépôt: 08.01.2025
(51) Int. Cl.: F16L 55/172, B01D 53/00, G06F 30/23

(54) **PROCÉDÉ DE RENFORT D'UN ÉQUIPEMENT SOUS PRESSION**
VERFAHREN ZUR VERSTÄRKUNG EINER DRUCKVORRICHTUNG
PROCESS OF REINFORCING A PRESSURISED DEVICE

(30) Priorité: 10.01.2024 FR 2400217
(43) Date de publication de la demande: 16.07.2025
(73) Titulaire: L'AIR LIQUIDE, SOCIETE ANONYME POUR L'ETUDE ET L'EXPLOITATION DES PROCEDES GEORGES CLAUDE, 75007 Paris (FR)
(72) Inventeur: GALLIENNE, Nicolas, 78354 Les Loges en Josas (FR); GARY, Daniel, 78354 Les Loges en Josas (FR); FURTADO, Jader, 78354 Les Loges en Josas (FR)
(74) Mandataire: Air Liquide

(56) Documents cités:
- EP-A1- 4 372 263
- WO-A1-2018/042577
- WO-A1-2023/286567
- US-A1- 2016 040 821

## Description

La présente invention concerne un procédé pour préserver l'intégrité structurelle d'une structure destinée au conditionnement d'un fluide sous pression. L'invention vise notamment à renforcer une structure comprenant une région susceptible de présenter un défaut de structure, à empêcher l'apparition d'un défaut.

La structure peut notamment être un équipement mécano-soudé, également appelé équipement chaudronné, s'entendant d'un assemblage d'une ou plusieurs pièces métalliques obtenu par soudage et ayant une fonction mécanique. Dans la présente demande, un équipement mécano-soudé couvre également une canalisation ou tuyauterie. Un équipement sous pression désigne un équipement apte et destiné au traitement, au conditionnement et/ou au transport, sous une pression supérieure à la pression atmosphérique, de fluides à l'état gazeux, liquéfiés ou diphasiques liquide-gaz, en particulier une pression d'au moins 5 bar, de préférence au moins 20 bar, voire jusqu'à 1200 bar ou plus.

L'intégrité structurelle des équipements sous pression est un point clé pour la sécurité de leur exploitation. Une perte de confinement induite par la fissuration de l'équipement présente un risque important qui peut nécessiter l'arrêt de son exploitation pour réparation ou remplacement.

Parmi les équipements sous pression, on connaît les adsorbeurs. Ces équipements sont des réservoirs mis en œuvre dans des unités de traitement par adsorption visant à retirer un gaz d'un mélange gazeux, en utilisant son affinité chimique et ses caractéristiques particulières vis-à-vis d'un matériau adsorbant contenu dans les adsorbeurs. En particulier, on connaît les adsorbeurs des unités de traitement par adsorption à modulation de pression, couramment appelées unités PSA (acronyme de l'anglais pour « Pressure Swing Adsorption »), qui sont exposés à des oscillations de pression contrôlées. On connaît également les adsorbeurs des unités de traitement par adsorption à modulation de température, couramment appelées unités TSA (acronyme de l'anglais pour « Temperature Swing Adsorption »), ou encore VSA (acronyme de l'anglais pour « Vacuum Swing Adsorption »), qui sont exposés à des oscillations de température contrôlées.

Les adsorbeurs de type PSA, VSA ou TSA sont soumis à des variations cycliques de pression ou de température dans les équipements qui favorisent l'apparition de défauts de structure, en particulier des défauts tels que des fissures de fatigue pouvant se propager rapidement en fonction des propriétés de la matière utilisée. Ainsi, les adsorbeurs PSA peuvent subir des cycles d'une durée de 3 à 6 minutes qui comprennent les phases de pressurisation, adsorption et dépressurisation, soit de 15 à 20 cycles par heure et plus de 400 cycles par jour donc plus de 170000 cycles par an.

L'intégrité structurelle d'un adsorbeur est de ce fait exposée à un mode d'endommagement dit de fatigue. L'apparition ou la progression des défauts peuvent d'ailleurs être accélérées en présence d'hydrogène (H2) par un phénomène de fragilisation par hydrogène, désigné par les termes « Hydrogen Enhanced Fatigue » en anglais.

Parmi les équipements mécano-soudés sous pression, les canalisations de transports de fluide, les réservoirs de stockage de fluide, les composants des unités de reformage sont également soumis à des conditions opératoires sévères, en particulier lorsqu'ils sont destinés par exemple à stocker ou transporter des fluides.

De façon générale, ces équipements mécano-soudés sous pression requièrent une surveillance particulière. Parmi les facteurs de défaillance, on retrouve l'endommagement par fatigue, l'usure due à la corrosion par exemple, suite à une mise en œuvre dans l'exposition à une atmosphère agressive, à un entretien insuffisant, ou l'endommagement suite à un choc. Il est à noter que le risque de fissuration est plus élevé dans les zones à fortes contraintes ou le long des soudures.

Les équipements mécano-soudés sous pression sont donc soumis à des inspections périodiques qui sont faites au moyen de techniques de contrôle non-destructif, par exemple des techniques utilisant les ultrasons, les courants de Foucault, les émissions acoustiques.

Ces contrôles visent à anticiper ou à déterminer l'apparition d'un défaut ou à en suivre l'évolution. Les défauts recherchés sont par exemple une cavité, un départ de fissure ou une fissure créée par certaines conditions de chargement ou de fonctionnement, une zone poreuse ou une zone de corrosion de la structure en contact avec des produits actifs ou encore la délamination entre les bandes d'un matériau composite. Des portions de l'équipement peuvent aussi être identifiées comme sujettes à l'apparition de défaut et nécessitant un renforcement pour l'éviter.

L'importance du défaut présent dans la structure de l'équipement peut être telle que la sécurité de l'équipement est compromise et qu'il est nécessaire de stopper son exploitation pour y remédier.

Les techniques de réparation actuelles ne donnent pas satisfaction du fait de leur complexité de mise en œuvre et de la nécessité de procéder à l'arrêt complet et au démontage de l'équipement. Ainsi, dans le cas d'un adsorbeur, l'adsorbant doit être déchargé de son contenant, l'adsorbeur doit être démonté et être envoyé en usine afin d'y découper sur sa paroi un anneau contenant le défaut détecté. Les portions saines de l'adsorbeur sont ensuite à nouveau soudées. L'adsorbeur est inutilisable pendant plusieurs mois et la nouvelle soudure doit être à nouveau qualifiée, ce qui complexifie l'opération de maintenance d'un point de vue logistique.

On connait de la demande FR3125733A1, un procédé pour renforcer un équipement mécano-soudé apte et destiné à contenir un fluide sous pression. L'équipement comprend une paroi périphérique présentant au moins un défaut et un revêtement étant déposé sur une portion de la paroi périphérique comprenant ledit défaut. Ce revêtement est déposé par projection thermique à froid de particules non fondues vers ladite paroi périphérique au moyen d'un fluide vecteur et le revêtement est déposé de façon à former une bande de renfort autour de la paroi périphérique de l'équipement.

Ce procédé de mise en place du revêtement est complexe à mettre en œuvre, en effet ce procédé nécessite de nombreuses opérations pour mettre en place le revêtement. Par ailleurs ce procédé de mise en place du revêtement impose en cas de retrait du revêtement d'autres opérations d'usinage ou de traitement thermique qui risque d'endommager l'équipement destiné à être utilisé sous pression. En outre, ce revêtement peut rompre sous l'effet de la pression. Lors de sa rupture, des projectiles sont alors projetés, ce qui compromet la sécurité de l'utilisateur circulant autour de l'équipement.

WO2023286567A1 divulgue un raccord de réparation de fuite comprenant des bandes métalliques fixées autour d'un tuyau et une feuille d'étanchéité élastique assurant l'étanchéité. La feuille présente des nervures formant des zones en creux, la nervure la plus externe étant disposée en retrait du bord de la bande métallique.

La présente invention vise à remédier efficacement à ces inconvénients en proposant un dispositif de renfort d'un équipement sous pression qui soit plus facile et plus rapide à mettre en place autour de l'équipement sous pression ou à retirer, et dont la mise en place et/ou le retrait ne dégrade pas l'intégrité mécanique de l'équipement et qui réduit, voire élimine, le risque de projections en cas de rupture.

La solution de l'invention est définit par un procédé selon la revendication 1. La revendication 2 définit un mode de réalisation préféré.

L'invention va maintenant être mieux comprise grâce à la description qui va suivre, donnée à titre d'exemple illustratif et non limitatif et faite en référence aux figures ci-annexées parmi lesquelles :
Fig. 1 est une représentation schématique partielle d'un mode de réalisation d'un dispositif
Fig. 2 est une représentation schématique partielle d'un mode de réalisation d'un dispositif
Fig. 3 est une représentation schématique partielle d'un mode de réalisation d'un ensemble comprenant un dispositif.
Fig. 4 schématise les conditions de simulations réalisées avec une structure sans mise en œuvre de l'invention en comparaison avec des résultats de simulations obtenus avec une structure renforcée et/ou réparée selon un mode de réalisation de l'invention.
Fig. 5 schématise un mode de propagation d'un défaut du type fissure.
Fig. 6 représente des résultats des simulations.
Fig. 7 est une représentation schématique partielle d'un mode de réalisation d'un ensemble comprenant une structure avec un défaut.
Fig. 8 est représentation d'un mode de réalisation d'un support du renfort.

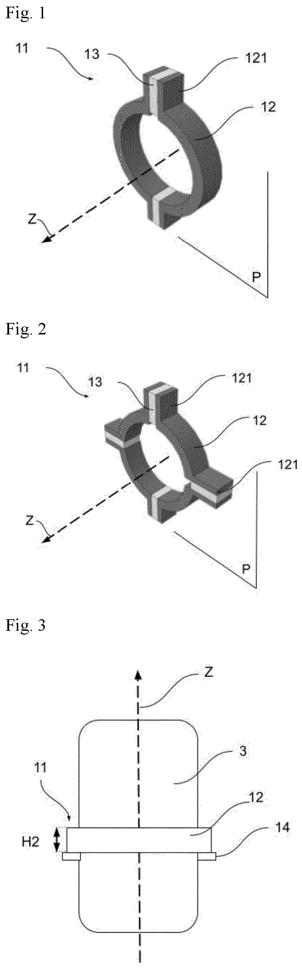

En référence à Fig. 1 et Fig. 3, le dispositif 11 selon un mode de réalisation, comprend au moins deux parties en arc de cercle 12. Ces deux parties en arc de cercle 12 s'étendent selon un plan P. Ces deux parties en arc de cercle 12 sont destinées à être assemblées ensemble autour d'une structure. La structure est par exemple en métal. Dans un mode de réalisation, la structure est réalisée en acier carbone ou acier inoxydable.

La structure est par exemple soumise à un cyclage avec de fortes variations de pression de quelques bars à quelques dizaines de bars. La structure peut être un équipement dit sous pression, c'est-à-dire apte et destiné à contenir un fluide sous pression, tel un réacteur, un adsorbeur d'une unité de traitement par adsorption à modulation de pression ou encore une adsorbeur d'une unité de traitement par adsorption à modulation de température ou une canalisation.

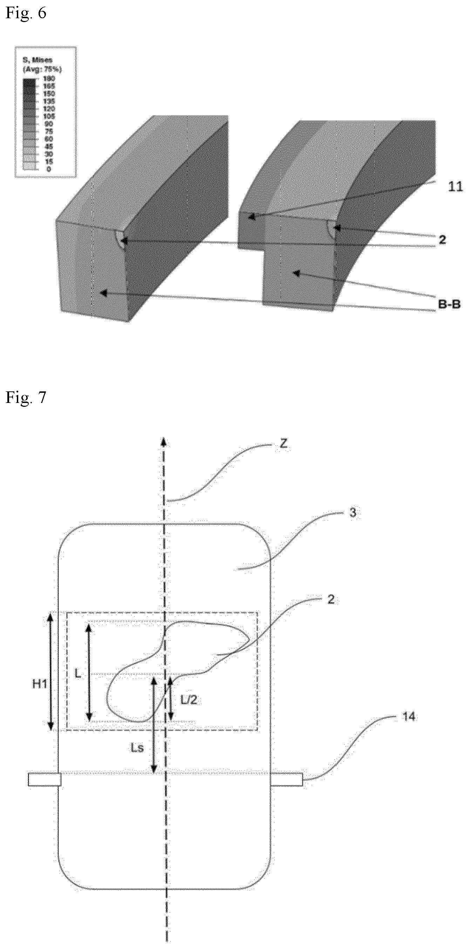

La structure comprend une enveloppe 3 externe s'étendant selon un axe longitudinal Z perpendiculaire au plan P entre une base et un sommet. La structure présente une épaisseur mesurée selon le plan P, perpendiculairement à l'axe longitudinal Z. L'axe longitudinal Z est vertical dans le cas illustré, sachant qu'un positionnement horizontal de la structure est envisageable dans le cadre de l'invention. En référence à Fig. 7, la structure peut présenter au moins un défaut 2 de structure, par exemple une fissure de fatigue survenant à cause de cycles répétés de pressurisation, adsorption et dépressurisation. Ce défaut 2 peut être identifié au moyen par exemple d'un contrôle non destructif comme un contrôle visuel, un contrôle par radiologie ou un contrôle par ultrason. Ce défaut 2 peut être caractérisé par une longueur L mesurée selon l'étendue maximale du défaut 2 selon l'axe longitudinal Z, c'est-à-dire la longueur L mesurée entre une première extrémité et une deuxième extrémité du défaut 2. Le centre du défaut 2 se situe à la moitié de la longueur L selon l'axe longitudinal Z, c'est-à-dire à équidistance de ladite première extrémité et de ladite deuxième extrémité du défaut 2. Ce défaut 2 peut aussi être caractérisé par une profondeur mesurée selon le plan P, perpendiculairement à l'axe longitudinal Z.

L'utilisateur définit au moins une zone à renforcer comprenant au moins un défaut 2 de structure. La zone à renforcer a une première hauteur H1 mesurée selon l'axe longitudinal Z et définie de sorte à couvrir le défaut 2, c'est-à-dire à couvrir au moins son étendue selon l'axe longitudinal Z.

Dans un mode de réalisation, le défaut 2 présente une profondeur inférieure à l'épaisseur de la structure. Dans un mode de réalisation, la profondeur du défaut 2 est inférieure à un tiers de l'épaisseur de la structure.

L'utilisateur peut aussi avoir détecté une fragilité de structure d'un équipement sur une région susceptible de présenter un défaut 2, lors d'un contrôle périodique ou grâce à une simulation par éléments finis. Au moins un défaut 2 risque d'apparaître sur cette région lors de l'utilisation de la structure. La région susceptible de présenter au moins un défaut 2 peut être caractérisée par une longueur L mesurée selon l'étendue maximale de la région selon l'axe longitudinal Z, c'est-à-dire la longueur L mesurée entre une première extrémité et une deuxième extrémité de cette région. Le centre de la région susceptible de présenter au moins un défaut 2 se situe à la moitié de la longueur L selon l'axe longitudinal Z, c'est-à-dire à équidistance de ladite première extrémité et de ladite deuxième extrémité de cette région. Cette région peut aussi être caractérisée par une profondeur mesurée selon le plan P, perpendiculairement à l'axe longitudinal Z. L'utilisateur définit au moins une zone à renforcer comprenant au moins ladite région susceptible de présenter au moins un défaut 2. La zone à renforcer a une première hauteur H1 mesurée selon l'axe longitudinal Z et définie de sorte à couvrir cette région, c'est-à-dire à couvrir son étendue selon l'axe longitudinal Z.

Les parties en arc de cercle 12 sont disposées sur cette zone à renforcer de sorte à former un renfort circulaire. Les parties en arc de cercle 12 s'étendent sur au moins une partie de cette zone et de manière circulaire autour de la structure. Le dispositif 11 permet ainsi de ralentir, voire d'empêcher complètement la propagation du défaut 2. Lorsque l'utilisateur a identifié une région susceptible de présenter au moins un défaut 2, alors le dispositif 11 permet de renforcer la région susceptible de présenter au moins un défaut 2 et ainsi ralentir, voire éviter l'apparition de défaut 2 telle une fissure sur la structure. Les parties en arc de cercle 12 peuvent être caractérisées par une deuxième hauteur H2. Dans un mode de réalisation, les parties en arc de cercle 12 s'étendent sur au moins la première hauteur H1 de la zone à renforcer, la deuxième hauteur H2 est alors au moins égale à la hauteur H1. Dans un mode de réalisation, les parties en arc de cercle 12 s'étendent sur au moins deux fois la première hauteur H1de la zone à renforcer, la deuxième hauteur H2 est alors au moins égale à deux fois la hauteur H1.

Le dispositif 11 comprend au moins un support 14. Ledit au moins un support 14 comprend un bord inférieur et un bord supérieur opposé au bord inférieur selon l'axe longitudinal Z, le bord supérieur étant orienté vers la zone à renforcer et étant le plus proche du défaut 2. Dans un mode de réalisation, lorsque la structure est agencée verticalement, le bord supérieur est positionné sous la zone à renforcer. Le support 14 permet ainsi de positionner les parties en arc de cercle 12, c'est-à-dire de les positionner par rapport au défaut.

Les parties en arc de cercle 12 sont destinées à être agencées contre l'enveloppe de la structure et contre le bord supérieur. Dans un mode de réalisation, lorsque la structure est agencée verticalement, les parties en arc de cercle 12 sont destinées à être agencées sur le bord supérieur.

Ledit au moins un support 14 est destiné à être fixé sur l'enveloppe externe de la structure, par exemple par pointage, soudage, brasage ou collage. Dans un mode de réalisation, la géométrie du support couvre le pourtour de l'enveloppe externe. Le support 14 est alors fixé autour de l'enveloppe externe de la structure. Ainsi le dispositif de renfort 12, lorsqu'il est agencé contre le bord supérieur du support 14 est positionné précisément et ce dispositif de renfort 12 est stabilisé. Dit autrement, il y a ainsi moins de risque que le dispositif de renfort 12 ne soit déplacé accidentellement.

Les parties en arc de cercle 12 sont agencées contre ledit au moins un support 14. Les parties en arc de cercle 12 sont ainsi plus précisément positionnées. Lorsque l'utilisateur détermine la localisation d'au moins un défaut 2 et/ou d'au moins une région susceptible de présenter au moins un défaut 2, il détermine la zone à renforcer comprenant au moins le défaut 2 et/ou au moins la région susceptible de présenter au moins un défaut 2. Ledit au moins un support 14 est alors fixé sur l'enveloppe 3 externe sous la zone à renforcer. Les parties en arc de cercle 12 sont positionnées et sont agencées contre le bord supérieur du support 14. Dans un mode de réalisation, le bord supérieur du support 14 est disposé à une distance Ls du centre du défaut. Dans un mode de réalisation, la distance Ls est au moins égale à 0,75 fois la longueur L. Dans un mode de réalisation, la distance Ls est au moins égale à la longueur L. Dans un mode de réalisation, ledit au moins un support 14 est en métal.

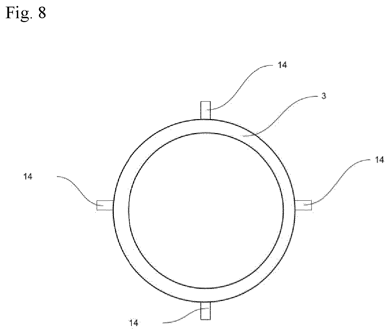

Dans un mode de réalisation, le dispositif de renfort comprend au moins deux supports 14 qui permettent une encore meilleure stabilité lors de la mise en place des parties en arc de cercle 12. Dans un mode de réalisation, le dispositif de renfort comprend trois ou quatre supports 14. Dans un mode de réalisation, les supports 14 sont destinés à être fixés de manière circulaire autour de l'enveloppe externe de la structure. Chaque support 14 est alors destiné à être fixé sur la structure, par exemple par pointage, soudage, brasage ou collage. «Autour » signifie que les supports 14 sont disposés autour de la structure de sorte que les bords supérieurs des supports 14 forment un plan, par exemple perpendiculaire à l'enveloppe externe de la structure 3. Ainsi le dispositif de renfort 12, lorsqu'il est agencé contre le bord supérieur du support 14 est positionné précisément par rapport au défaut et/ou à la région et ceci de façon stabilisée. Il y a ainsi moins de risque que le dispositif de renfort 12 ne soit déplacé accidentellement. Fig. 8 présente un mode de réalisation avec quatre supports 14.

Les deux parties en arc de cercle 12 sont assemblées ensemble, deux à deux, avec un moyen d'assemblage amovible 13. Ce moyen d'assemblage amovible 13 permet un positionnement ou un retrait aisé des parties en arcs de cercle 12. Ainsi le temps de mise en place est réduit par rapport à un dispositif de renfort qui est soudé ou réalisé par projection de type cold spray. Par ailleurs, ce moyen d'assemblage amovible garantit l'intégrité mécanique de la structure, en effet lors du positionnement ou le retrait du dispositif, il n'y a pas de risque d'endommager la structure. Le moyen d'assemblage amovible peut comprendre au moins par exemple un boulon, un tirant, un détendeur ou encore tout moyen mécanique connu de l'homme du métier.

Dans un mode de réalisation, l'utilisation du moyen de fixation amovible nécessite par exemple de percer les parties en arc de cercle 12 afin de permettre la fixation par un boulon.

Dans un mode de réalisation, l'utilisation du moyen de fixation amovible nécessite une encoche réalisée par exemple par fraisage sur au moins une partie en arc de cercle 12.

Dans un mode de réalisation, les au moins deux parties en arc de cercle 12 peuvent comprendre chacune deux protubérances 121. Ces deux protubérances 121 sont disposées chacune à chacune des extrémités des parties en arc de cercle 12. Ainsi les deux parties en arc de cercle 12 peuvent être fixées ensemble avec le moyen d'assemblage amovible 13 par l'intermédiaire des protubérances 121. La fixation des deux parties en arc de cercle 12 en est facilitée, la manipulation manuelle par exemple est plus ergonomique. Le moyen d'assemblage amovible peut comprendre au moins par exemple un boulon, un tirant, un détendeur ou encore tout moyen mécanique connu de l'homme du métier.

Dans un mode de réalisation, les protubérances 121 sont percées pour permettre la fixation, par exemple grâce à une vis. Dans un mode de réalisation les protubérances 121 sont usinées de façon à permettre leur fixation, par exemple avec au moins un boulon. Dans un mode de réalisation, les protubérances 121 sont usinées de telle sorte qu'elles forment un profil fileté lorsqu'elles sont apposées l'une contre l'autre, permettant ainsi l'utilisation d'un boulon comme moyen amovible 13 pour les maintenir assemblées. Dans un mode de réalisation, les protubérances 121 peuvent par exemple être munies d'une encoche qui permet de fixer un détendeur ou un tirant.

En référence à Fig. 2, le dispositif 11 comprend trois parties en arc de cercle 12 qui sont assemblées ensemble deux à deux. Les parties en arc de cercle 12 sont ainsi moins encombrantes, plus légères à assembler autour de la structure. Par ailleurs si l'une d'elle est endommagée par exemple par un choc lors du transport de la structure, alors la partie en arc de cercle 12 est moins encombrante et est plus aisément remplacée.

Dans un autre mode de réalisation, le dispositif 11 comprend quatre parties en arc de cercle 12 qui sont assemblées ensemble deux à deux. Les parties en arc de cercle 12 sont ainsi moins encombrantes, plus légères à assembler autour de la structure. Par ailleurs si l'une d'elle est endommagée par exemple par un choc lors du transport de la structure, alors la partie en arc de cercle 12 est moins encombrante et est plus aisément remplacée.

En référence à Fig. 1 et Fig. 2, les parties en arc de cercle 12 comprennent chacune une surface intérieure destinée à être en contact avec ladite structure et une surface extérieure opposée à la surface intérieure. Les parties en arc de cercle 12 ont une épaisseur mesurée orthogonalement entre ladite surface intérieure et ladite surface extérieure. Cette épaisseur est de préférence supérieure ou égale à 5 mm. Une telle épaisseur permet de réduire la vitesse de propagation des fissures dans la structure.

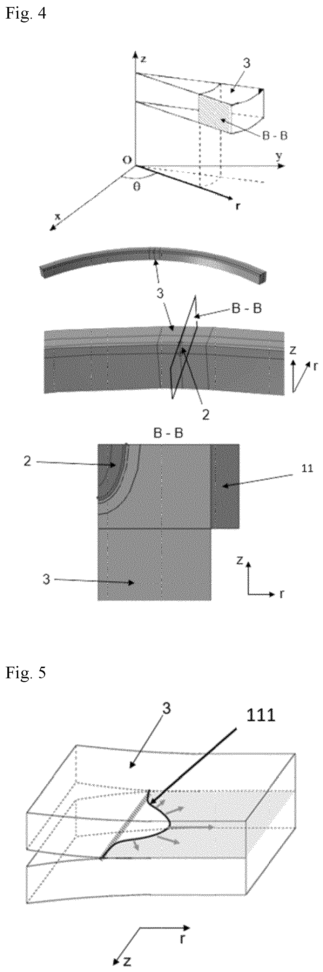

Afin de démontrer l'efficacité du dispositif, des facteurs d'intensité de contraintes ont été calculés par la méthode des éléments finis sur une portion d'un réservoir de forme cylindrique présentant une fissure sur sa surface interne. Fig. 4 schématise les conditions de réalisation des simulations. On a considéré une portion d'enveloppe périphérique 3 dans un repère cylindrique de direction radiale r et longitudinale z. La structure avait un diamètre de 1360 mm. L'épaisseur de l'enveloppe était de 80 mm et la pression régnant dans la structure était de 3 MPa. La fissure présentait, dans un plan de coupe transversale B - B de l'enveloppe 3, la forme d'un quart d'ellipse avec un rayon de 20 mm mesuré parallèlement à la direction longitudinale z et de 10 mm mesuré dans la direction radiale r. Dans les calculs, une portion droite de l'enveloppe de la structure d'une hauteur de 100 mm était considérée. Les facteurs d'intensité de contrainte obtenus avec et sans dispositif 11 de renfort ont été comparés. Le dispositif 11 de renfort avait une hauteur de 80 mm, mesurée parallèlement à l'axe longitudinal Z, et une épaisseur de 5, 10 ou 30 mm selon le cas. Deux exemples de matériau de renfort ont été considérés, un acier dont le module d'élasticité E avait une valeur de 210 GPa et une alumine dont le module d'élasticité E avait une valeur de 420 GPa.

Les résultats des simulations sont présentés sur Tableau 1. Tableau 1 présente un comparatif du facteur d'intensité de contraintes Ki obtenu sans dispositif 11 de renfort et avec différentes configurations de dispositif de renfort. Notons que le facteur d'intensité de contraintes représente la force motrice qui pilote la propagation de la fissure, cette force motrice étant la résultante du niveau de contraintes et de la géométrie de la fissure.

**Tableau 1**

| Facteurs d'intensité de contraintes Ki (Force motrice de la propagation de la fissure) en MPa.mm-1/2 | | | | | |
|---|---|---|---|---|---|
| Sans l'invention | Avec dispositif de renfort selon l'invention (Matériau / épaisseur) | | | | |
| | Acier (E=210 GPa) / 5mm | Acier (E=210GPa) / 10mm | Acier (E=210GPa) / 30mm | Alumine (E=420GPa) / 10mm | Alumine (E=420GPa) / 30mm |
| 253 | 249 | 245 | 226 | 235 | 203 |

Les résultats des calculs dans Tableau 1 montrent qu'un dispositif de renfort selon un mode de réalisation de l'invention permet de diminuer les contraintes mécaniques au voisinage de la fissure ainsi que les facteurs d'intensité de contraintes en front de fissure jusqu'à 20%, ce qui démontre une réduction de la capacité de la fissure à se propager. Cette diminution se caractérise par une baisse de la vitesse de propagation de la fissure. Notons que le front de fissure est défini comme la limite entre la fissure et la matière non fissurée de l'enveloppe 3. Un mode de propagation de fissure avec un front de fissure 111 est schématisé sur Fig. 5. Fig. 6 montre une réduction des contraintes de Von mises notamment dans la périphérie de la fissure.

Il est à noter que l'augmentation de l'épaisseur du dispositif de renfort, et plus précisément des parties en arc de cercle, diminue la sollicitation au niveau du défaut 2, tout comme l'augmentation du module d'élasticité du matériau de renfort.

Il est divulgué aussi un ensemble destiné au conditionnement d'un fluide sous pression comprenant une structure destinée au conditionnement d'un fluide sous pression et un dispositif 11 de renfort tel que décrit précédemment. Cet ensemble peut par exemple comprendre un équipement mécano-soudé. Dans un mode de réalisation, l'équipement est un réservoir, en particulier un absorbeur, de préférence positionnée verticalement.

La structure comprend une enveloppe 3 externe s'étendant selon un axe longitudinal Z perpendiculaire au plan P entre une base et un sommet. Au moins un support 14 est fixé sur l'enveloppe externe de la structure pour recouvrir de manière circulaire celle-ci, par exemple par pointage, soudage, ou collage. Ainsi, le support 14 est placée tout autour de l'enveloppe 3 externe de manière circulaire. L'avantage de ce mode de réalisation permet une fixation pérenne du support 14 sur la structure. Les parties en arc de cercle 12 sont agencées contre ledit au moins un support 14 et sont assemblées ensemble autour de la structure au moyen d'un système amovible de fixation 13.

Dans un mode de réalisation, le au moins un support 14 est réalisé d'un seul tenant avec l'enveloppe 3 externe de la structure, par exemple par fabrication additive.

Lorsque l'utilisateur détermine la localisation d'un défaut 2 sur la structure au cours d'un contrôle ou lorsque l'utilisateur détermine une région susceptible de présenter au moins un défaut 2, où un défaut 2 peut apparaître, par simulation numérique par éléments finis. Le défaut 2 peut aussi avoir été observé sur une autre structure et l'utilisateur souhaite utiliser le dispositif afin de prévenir sur d'autre structure l'apparition du défaut 2. L'utilisateur caractérise ce défaut 2, comme décrit précédemment, notamment par une longueur L mesurée selon l'étendue maximale du défaut 2 selon l'axe longitudinal Z entre une première extrémité et une deuxième extrémité du défaut 2. Le centre du défaut 2 se situe à la moitié de la longueur L selon l'axe longitudinal Z. Ce défaut 2 peut aussi être caractérisé par une profondeur Pf mesurée selon le plan P, perpendiculairement à l'axe longitudinal Z.

L'utilisateur définit une zone à renforcer comprenant ce défaut 2 de structure. La hauteur de la zone selon l'axe longitudinal Z est définie de sorte à couvrir le défaut 2, c'est-à-dire à couvrir son étendue selon l'axe longitudinal Z. Les parties en arc de cercle 12 sont disposées sur cette zone et tout autour de la structure permettant ainsi de ralentir, voire d'empêcher complètement la propagation du défaut 2.

Au moins un support 14 est fixé sur l'enveloppe 3 externe sous la zone à renforcer définie de sorte que les parties en arc de cercle 12 sont agencées contre le bord supérieur du au moins un support 14. Dans un mode de réalisation, le bord supérieur du support 14 est disposé à une distance Ls du centre du défaut. Dans un mode de réalisation, la distance Ls est au moins égale à 0,75 fois la longueur L. Dans un mode de réalisation, la distance Ls est au moins égale à la longueur L.

Dans un mode de réalisation, au moins une couche d'un matériau déformable est disposée entre les parties en arc de cercle 12 du dispositif de renfort et l'enveloppe 3 externe de la structure. Plus particulièrement cette couche de matériau déformable est disposée entre la surface interne des parties en arc de cercle 12 du dispositif 11 de renfort et l'enveloppe 3 externe de la structure de sorte à assurer un contact sur tout ou partie de la circonférence de l'enveloppe entre cette couche et les parties en arc de cercle 12 ainsi qu'entre cette couche et l'enveloppe 3 externe. Ainsi la compression appliquée tout autour de la circonférence de l'enveloppe 3 est homogène. Cette couche permet entre autres par exemple de combler des défauts de surface. Ainsi l'efficacité du dispositif 11 en est améliorée et le dispositif 11 permet de ralentir, voire d'empêcher complètement la propagation du défaut 2.

Dans un mode de réalisation, la couche présente une faible élasticité afin d'être facilement positionnée par l'utilisateur. Cette couche présente typiquement un module de Young inférieur à 3GPa. Cette couche présente par ailleurs une raideur suffisante lors de l'assemblage du dispositif 11 autour de la structure de sorte que cette couche conserve sa forme et sa position malgré l'effort de compression appliqué par le dispositif 11 de renfort. Cette couche est en polymère, par exemple elle est réalisée en polyuréthane ou en résine epoxy. L'élasticité et la raideur de la couche sont déterminées par des essais de traction.

L'invention concern un procédé de mise en place d'un dispositif pour prévenir l'apparition de défaut 2 de structure.

Dans une étape de ce procédé, l'utilisateur inspecte l'état d'un équipement destiné au conditionnement d'un fluide sous pression, par exemple au travers d'une inspection périodique au moyen d'un contrôle visuel ou encore d'un moyen de contrôle non destructif tel qu'un contrôle par ultrasons ou par courants de Foucault. Lorsqu'au moins un défaut 2 structurel est détecté, par exemple une fissure, l'utilisateur caractérise dans une autre étape ce défaut 2 par une longueur L mesurée selon l'étendue maximale du défaut 2 selon l'axe longitudinal Z. Le centre du défaut 2 se situe à la moitié de la longueur L selon l'axe longitudinal Z. Ce défaut peut aussi être caractérisé par une profondeur Pf mesurée selon le plan P, perpendiculaire à l'axe longitudinal Z. Dans un mode de réalisation, l'utilisateur peut déterminer au moins une région susceptible de présenter un défaut 2 par une analyse statistique des structures en utilisation afin de déterminer où un défaut 2 peut survenir.

Selon l'invention, l'utilisateur determine une région susceptible de présenter un défaut 2 par simulation par éléments finis de la structure soumise à des contraintes d'utilisation ou de cyclage. Cette région susceptible de présenter un défaut 2 de structure est la localisation d'apparition potentielle d'un défaut 2 si aucun dispositif de renfort n'est mis en place.

Dans une autre étape, l'utilisateur détermine une zone à renforcer comprenant au moins ce défaut 2 de structure et/ou au moins cette région susceptible de présenter un défaut 2 de structure. Un première hauteur H1 de la zone selon l'axe longitudinal Z est définie de sorte à couvrir au moins le défaut 2, la première hauteur H1 de la zone est donc au moins égale à la longueur L. Dans un mode de réalisation, la zone comprend une pluralité de défauts 2 et/ou une pluralité de régions.

Dans une autre étape, le dispositif 11 est disposé tout autour de la structure de sorte à couvrir cette zone et permettant ainsi de ralentir, voire d'empêcher complètement la propagation du défaut 2. Ce dispositif 11 permet aussi de ralentir, voire d'empêcher, l'apparition d'un défaut 2 sur la région susceptible de présenter au moins un défaut 2. Pour disposer le dispositif 11, au moins un support 14 est fixé sur l'enveloppe 3 externe sous la zone à renforcer déterminer, par exemple par pointage, soudage, brasage ou collage. Le au moins un support 14 est destiné à recevoir les parties en arc de cercle 12 présentant une deuxième hauteur H2. Ledit au moins un support 14 est ainsi fixé de sorte que les parties en arc de cercle 12 sont agencées contre le bord supérieur du au moins un support 14 et qu'elles s'étendent au moins en partie sur ladite zone à renforcer. Dans un mode de réalisation, la deuxième hauteur H2 est au moins égale à la première hauteur H1. Ces parties en arc de cercle sont enfin assemblées deux à deux avec un moyen de fixation amovible 13. Dans un mode de réalisation, le bord supérieur du support 14 est disposé à une distance Ls du centre du défaut. Dans un mode de réalisation, la distance Ls est au moins égale à 0,75 fois la longueur L. Dans un mode de réalisation, la distance Ls est au moins égale à la longueur L.

## Revendications

1. Procédé de renfort d'une structure pour le conditionnement d'un fluide sous pression, ladite structure comprenant une enveloppe (3) externe s'étendant selon un axe longitudinal Z, le procédé de renfort comprenant les étapes suivantes :
- a) simulation par éléments finis de ladite enveloppe (3) de la structure, de manière à déterminer au moins une région susceptible de présenter au moins un défaut (2) de structure, ladite au moins une région susceptible de présenter au moins un défaut (2) de structure s'étendant entre une première extrémité et une deuxième extrémité sur une longueur L mesurée selon l'axe longitudinal Z et présentant un centre situé à équidistance de ladite première extrémité et de ladite deuxième extrémité,
- b) détermination d'au moins une zone à renforcer de ladite enveloppe (3) comprenant ladite au moins une région susceptible de présenter au moins un défaut (2) de structure,
- c) mise en place d'au moins un dispositif de renfort (11) comprenant :
- au moins deux parties en arc de cercle (12) s'étendant selon un plan P,
- des moyens d'assemblage amovibles (13),
- au moins un support (14) comprenant un bord supérieur et un bord inférieur opposé au bord supérieur selon un axe longitudinal Z perpendiculaire au plan P,
au moyen des étapes suivantes :
- i. positionnement du bord supérieur dudit au moins un support (14) de manière circulaire autour de la dite enveloppe (3) externe de ladite structure à une distance Ls dudit centre mesurée selon l'axe longitudinal Z,
- ii. positionnement autour de ladite structure d'au moins deux parties en arc de cercle (12), lesdites au moins deux parties en arc de cercle (12) étant agencées contre ladite structure et contre ledit bord supérieur dudit au moins un support (14) et s'étendant au moins en partie sur ladite au moins une zone à renforcer,
- iii. assemblage desdites au moins deux parties en arc de cercle (12) par lesdits moyens d'assemblage amovible (13).

2. Procédé de renfort selon la revendication 1, **caractérisé en ce que** ladite zone à renforcer a une première hauteur H1 mesurée selon l'axe longitudinal Z au moins égale à la longueur L, ladite distance Ls est au moins égale à 0,75 fois la longueur L, et les au moins deux parties en arc de cercle (12) ont une deuxième hauteur H2 mesurée selon l'axe longitudinal Z au moins égale à la première hauteur H1 de la zone à renforcer.

## Patentansprüche

1. Verfahren zur Verstärkung einer Struktur zur Aufnahme eines unter Druck stehenden Fluids, wobei die Struktur eine äußere Hülle (3) umfasst, die sich entlang einer Längsachse Z erstreckt, wobei das Verstärkungsverfahren die folgenden Schritte umfasst:
a) Finite-Elemente-Simulation der Hülle (3) der Struktur, um mindestens einen Bereich zu bestimmen, der mindestens einen Strukturdefekt (2) aufweisen kann, wobei sich der mindestens eine Bereich, der mindestens einen Strukturdefekt (2) aufweisen kann, zwischen einem ersten Ende und einem zweiten Ende über eine Länge L erstreckt, die entlang der Längsachse Z gemessen wird, und ein Zentrum aufweist, das sich in gleichem Abstand von dem ersten Ende und dem zweiten Ende befindet,
- b) Bestimmung mindestens einer zu verstärkenden Zone der Hülle (3), die den mindestens einen Bereich umfasst, der mindestens einen Strukturdefekt (2) aufweisen kann,
- c) Anbringung mindestens einer Verstärkungsvorrichtung (11), umfassend:
mindestens zwei bogenförmige Teile (12), die sich entlang einer Ebene P erstrecken,
ösbare Montagemittel (13),
mindestens eine Stütze (14), die eine obere Kante und eine untere Kante gegenüber der oberen Kante entlang einer Längsachse Z senkrecht zur Ebene P aufweist,
mittels der folgenden Schritte:
- i. Positionierung der oberen Kante der mindestens einen Stütze (14) kreisförmig um die äußere Hülle (3) der Struktur in einem Abstand Ls von dem Zentrum, gemessen entlang der Längsachse Z,
- ii. Positionierung von mindestens zwei bogenförmigen Teilen (12) um die Struktur herum, wobei die mindestens zwei bogenförmigen Teile (12) an der Struktur und an der oberen Kante der mindestens einen Stütze (14) angeordnet sind und sich mindestens teilweise über die mindestens eine zu verstärkende Zone erstrecken,
- iii. Montage der mindestens zwei bogenförmigen Teile (12) durch die lösbaren Montagemittel (13).

2. Verfahren zur Verstärkung nach Anspruch 1, **dadurch gekennzeichnet, dass** die zu verstärkende Zone eine erste Höhe H1 aufweist, die entlang der Längsachse Z gemessen wird und mindestens gleich der Länge L ist, der Abstand Ls mindestens gleich dem 0,75-fachen der Länge L ist, und die mindestens zwei bogenförmigen Teile (12) eine zweite Höhe H2 aufweisen, die entlang der Längsachse Z gemessen wird und mindestens gleich der ersten Höhe H1 der zu verstärkenden Zone ist.

## Claims

1. A method for reinforcing a structure for containing a fluid under pressure, said structure comprising an external envelope (3) extending along a longitudinal axis Z, the reinforcement method comprising the following steps:
a) finite element simulation of said envelope (3) of the structure, in order to determine at least one region susceptible to having at least one defect (2) of structure, said at least one region susceptible to having at least one defect (2) of structure extending between a first end and a second end over a length L measured along the longitudinal axis Z and having a center located equidistant from said first end and from said second end,
- b) determination of at least one zone to be reinforced of said envelope (3) comprising said at least one region susceptible to having at least one defect (2) of structure,
- c) installation of at least one reinforcement device (11) comprising:
at least two arcuate parts (12) extending along a plane P,
removable assembly means (13),
at least one support (14) comprising an upper edge and a lower edge opposite the upper edge along a longitudinal axis Z perpendicular to the plane P,
by means of the following steps:
- i. positioning of the upper edge of said at least one support (14) in a circular manner around the said external envelope (3) of said structure at a distance Ls from said center measured along the longitudinal axis Z,
- ii. positioning around said structure of at least two arcuate parts (12), said at least two arcuate parts (12) being arranged against said structure and against said upper edge of said at least one support (14) and extending at least partly over said at least one zone to be reinforced,
- iii. assembly of said at least two arcuate parts (12) by said removable assembly means (13).

2. The reinforcement method according to claim 1, **characterized in that** said zone to be reinforced has a first height H1 measured along the longitudinal axis Z at least equal to the length L, said distance Ls is at least equal to 0.75 times the length L, and the at least two arcuate parts (12) have a second height H2 measured along the longitudinal axis Z at least equal to the first height H1 of the zone to be reinforced.
